# EUROPEAN PATENT APPLICATION

(11) **EP 4 706 461 A2**
(43) Date of publication of application: **11.03.2026**
(21) Application number: 26152028.2
(22) Date of filing: 25.05.2023
(51) Int. Cl.: A47J 31/36

(54) **BEVERAGE BREWING SYSTEM AND RELATED METHODS**

(30) Priority: 26.05.2022 US 202263346196 P
(62) Divisional of application: 23733155.8
(71) Applicant: Lavazza Professional North America LLC, West Chester, PA 19380 (US)
(72) Inventor: GARLAND, Michael, Chineham, RG24 8JT (GB); MOULD, Philip, James, Spencer, Wimborne, BH21 1NY (GB); AUSTIN, Peter, David, High Wymcombe, HP13 7BL (GB); ELLA, John, Robert, Finchampstead, RG40 3QE (GB)
(74) Representative: Studio Torta S.p.A.

(57) **Abstract**

A beverage brewing system which includes a container and a beverage brewing apparatus. The container may include a body portion defining a cavity containing a beverage ingredient. The body portion may be flexible so that when it is unimpeded during a beverage vend is can expand from an initial volume to a maximum volume. The beverage brewing apparatus may support the container and may include an expansion limiter that can limit the expansion of the container during the beverage vend. The beverage brewing apparatus may operate in a first mode whereby the expansion limiter does not impede the container and the container expands from the initial state to the maximum expanded state during the beverage vend. The beverage brewing apparatus may operate in a second mode whereby the expansion limiter impedes the container and prevents the container from expanding to the maximum expanded state during the beverage vend.

## Description

### CROSS-REFERENCE TO RELATED APPLICATIONS

The present application claims the benefit of priority to United States Provisional Patent Application Serial No. 63/346,196, filed May 26, 2022, the entirety of which is incorporated herein by reference.

### BACKGROUND

Brewing coffee and other beverages in the comfort of home can take many different forms. There is the conventional style of brewing where a user positions a filter in a basket of the machine and then deposits ground coffee onto the filter. The machine then drips hot water onto the ground coffee on the filter, with the coffee beverage passing through the filter and into a pot or cup positioned below. There are machines which receive capsules containing a beverage ingredient, with the machines puncturing the capsules to introduce water therein for mixing with the beverage ingredient to brew the beverage. And there are machines which accept sachet-style packages which contain a beverage ingredient, with the machines introducing water into the interior of the beverage ingredient container for mixing with the beverage ingredient to brew the beverage. With the conventional style of brewing, the user can select the amount of liquid to use to correspond with the amount of ground coffee that the user deposited onto the filter. However, with the capsule and sachet style machines, there is a pre-determined amount of the beverage ingredient contained in the capsules/sachet and thus a consistent amount of liquid must be used to obtain a consistent taste and color.

However, coffee and other beverage brewing machines are becoming more and more sophisticated. Users may be able to control the amount of the brewed coffee/beverage used to ensure that the final drink product is not too strong, too weak, or otherwise of an undesirable flavor profile. Thus, a need exists for a machine that can accept current capsule/sachet type packages while controlling and/or adjusting the total dissolved solids in dependence on the type or size of beverage being vended and/or based on the amount of the beverage ingredient contained in the package.

### BRIEF SUMMARY

The invention may be directed to a beverage brewing system which includes a beverage ingredient container and a beverage brewing apparatus. The beverage ingredient container may include a body portion defining a cavity containing a beverage ingredient. The body portion may be flexible so that when it is unimpeded during a beverage vend is can expand from an initial volume to a maximum volume. The beverage brewing apparatus may support the beverage ingredient container and may include an expansion limiter that can limit the expansion of the beverage ingredient container during the beverage vend. The beverage brewing apparatus may operate in a first mode whereby the expansion limiter does not impede the beverage ingredient container and the beverage ingredient container expands from the initial state to the maximum expanded state during the beverage vend. The beverage brewing apparatus may operate in a second mode whereby the expansion limiter impedes the beverage ingredient container and prevents the beverage ingredient container from expanding to the maximum expanded state during the beverage vend. The invention may be directed to a method of brewing a beverage utilizing similar techniques.

In one aspect, the invention may be a beverage brewing system comprising: a beverage ingredient container comprising a body portion defining a cavity containing a beverage ingredient, the body portion of the beverage ingredient container being flexible so that, when the body portion of the beverage ingredient container is unimpeded, a volume of the cavity is configured to expand from an initial volume to a maximum volume during a beverage vend in which a liquid is introduced into the cavity; a beverage brewing apparatus comprising: a support member configured to support the beverage ingredient container; an expansion limiter comprising a first wall and a second wall that are at least partially spaced apart from one another by a gap, the beverage ingredient container being located within the gap when supported by the support member during the beverage vend; and wherein the beverage brewing apparatus is operable to vend a beverage in: a first mode whereby the first and second walls are spaced apart by a first maximum distance that is sufficient to enable the volume of the cavity of the beverage ingredient container to expand to the maximum volume during the beverage vend; and a second mode whereby the first and second walls are spaced apart by a second maximum distance that prevents the volume of the cavity of the beverage ingredient container from expanding to the maximum volume during the beverage vend, the second maximum distance being less than the first maximum distance.

The first wall of the expansion limiter may be positioned adjacent to a front surface of the beverage ingredient container and the second wall of the expansion limiter may be positioned adjacent to a rear surface of the beverage ingredient container during the beverage vend. In each of the first and second modes, the first wall may be spaced apart from the front surface of the beverage ingredient container and the second wall may be spaced apart from the rear wall of the beverage ingredient container at a start of the beverage vend while the cavity of the beverage ingredient container is at the initial volume.

When the beverage ingredient container is located in the gap prior to a start of the beverage vend, a minimum distance between the first and second walls of the expansion limiter and the beverage ingredient container in the first mode may be between 1mm and 10mm, and more specifically between 1mm and 5mm, or between 3mm and 8mm. When the beverage ingredient container is located in the gap prior to a start of the beverage vend, the minimum distance between the first and second walls of the expansion limiter and the beverage ingredient container in the second mode may be between 10mm and 20mm, or between 13mm and 18mm.

The first and second walls of the expansion limiter may not be in contact with the beverage ingredient container at a start of the beverage vend in either of the first and second modes.

In the first mode the liquid may be introduced into the cavity at a first pressure and in the second mode the liquid may be introduced into the cavity at a second pressure that is greater than the first pressure. The first pressure may be approximately 0.5 bar and the second pressure may be a maximum of 1.5 bar.

The first wall may be fixed and the second wall may be movable towards and away from the first wall to adjust a spacing distance between the first and second walls in response to user selection of the first mode or the second mode for the beverage vend.

The beverage brewing machine may include a door that is alterable between an open state whereby the beverage ingredient container can be inserted into the gap between the first and second walls of the expansion limiter and the nozzle can be engaged with the support member and a closed state. The first wall may be attached to or forms a part of the door.

Each of the first and second walls of the expansion limiter may be formed from a rigid, non-flexible material. Inner surfaces of the first and second walls which face the beverage ingredient container may be rigid.

Each of the first and second walls may include a front surface that faces the gap, the front surfaces of the first and second walls may include concave portions that face the beverage ingredient container when the beverage ingredient container is located in the gap. The front surfaces of the first and second walls may include convex portions that face the beverage ingredient container. The front surfaces of the first and second walls may include both concave and convex regions.

The expansion limiter may not clamp the beverage ingredient container between the first and second walls at a start of the beverage vend.

The expansion limiter may define a chamber that is open along opposing lateral sides thereof when the beverage brewing apparatus is vending the beverage in either of the first mode or the second mode.

The first and second walls of the expansion limiter may be entirely spaced apart from one another in both of the first and second modes such that no portion of the first wall is in contact with the second wall and vice versa.

In the first mode, upon the volume of the beverage ingredient container expanding to the maximum volume, the first and second walls may not contact the beverage ingredient container. In the second mode, upon the volume of the beverage ingredient container reaching an intermediate volume that is less than the maximum volume, the first and second walls may contact the beverage ingredient container to prevent the volume of the beverage ingredient container from expanding further.

The cavity of the beverage ingredient container may comprise a cavity axis. The first and second maximum distances may be measured in a direction perpendicular to the cavity axis.

The first and second walls may be in a fixed relative position upon initiation of the beverage vend in either of the first mode or the second mode.

The beverage ingredient container may comprise a nozzle having an inlet for receiving the liquid and introducing the liquid into the cavity of the body portion during the beverage vend, and wherein the support member is configured to support the beverage ingredient container by the nozzle such that the body portion of the beverage ingredient container hangs freely from the support member.

The first and second walls of the expansion limiter may be spaced from the beverage ingredient container at a start of the beverage vend when in either of the first and second modes so that a volume of the cavity of the beverage ingredient container expands during the beverage vend expands until reaching the maximum volume or being impeded by the first and second walls of the expansion limiter.

The beverage brewing apparatus may further comprises a control system and a user interface. The control system may be operably coupled to the expansion limiter and the user interface. Upon the user selecting the first mode on the user interface, the control system may be configured to cause at least one of the first and second walls of the expansion limiter to move so that the first and second walls are spaced apart by the first maximum distance. Upon the user selecting the second mode on the user interface, the control system may be configured to cause at least one of the first and second walls of the expansion limiter to move so that the first and second walls are spaced apart by the second maximum distance.

In another aspect, the invention may be a beverage brewing system comprising: a beverage ingredient container comprising a body portion defining a cavity containing a beverage ingredient, the body portion of the beverage ingredient container being flexible so that, when the body portion of the beverage ingredient container is unimpeded during a beverage vend, the body portion expands from an initial state in which the cavity has a first volume to a maximum expanded state in which the cavity has a second volume that is greater than the first volume; a beverage brewing apparatus comprising: a support member configured to support the beverage ingredient container during the beverage vend without impeding the expansion of the body portion of the beverage ingredient container; and an expansion limiter; and wherein during the beverage vend the body portion of the beverage ingredient container expands from the initial state to an intermediate expanded state in which the cavity has a third volume that is less than the second volume, and wherein the expansion limiter prevents expansion of the body portion of the beverage ingredient container beyond the intermediate expanded state.

The expansion limiter may be configured to at least partially surround the body portion of the beverage ingredient container during the beverage vend.

The expansion limiter may comprise a first wall and a second wall that are spaced apart from one another. At least a portion of the body potion of the beverage ingredient container may be located between the first and second walls during the beverage vend.

The first and second walls of the expansion limiter may not be in compressive contact with the body portion of the beverage ingredient container at a start of the beverage vend.

During the vend, the body portion of the beverage ingredient container may expand to the intermediate expanded state at which point the first and second walls of the expansion limiter may be in contact with the body portion of the beverage ingredient container and prevent further expansion of the body portion of the beverage ingredient container.

The body portion of the beverage ingredient container may comprise a front wall, a rear wall, and a periphery, the front and rear walls being bonded together along the periphery. Expansion of the body portion may occur in a direction between the front and rear walls. The first and second walls of the expansion limiter may face the front and rear walls of the body portion of the beverage ingredient container, respectively.

The beverage brewing apparatus may be configured to perform the beverage vend in a first mode or a second mode based upon user selection. Upon a user selecting the first mode the expansion limiter may be positioned relative to the beverage ingredient container so as to not impede the expansion of the body portion of the beverage ingredient container which enables the beverage ingredient container to expand to the maximum expanded state during the beverage vend. Upon the user selecting a second mode the expansion limiter may be positioned so as to impede the expansion of the body portion of the beverage ingredient container such that the beverage ingredient container expands to the intermediate expanded state and is prevented from expanding further due to contact between the expansion limiter and the body portion of the beverage ingredient container.

In still another aspect, the invention may be a method of brewing a beverage comprising: selecting, on a beverage brewing apparatus, one of a plurality of brewing modes for a beverage vend; inserting a beverage ingredient container into the beverage brewing apparatus, the beverage ingredient container comprising a body portion having a cavity containing a beverage ingredient; during the beverage vend, introducing a liquid from the beverage brewing apparatus into the cavity of the beverage ingredient container, the liquid mixing with the beverage ingredient in the cavity of the beverage ingredient container to form a beverage which exits through an outlet in a bottom end of the beverage ingredient container; wherein when a first mode is selected from the plurality of modes, the body portion of the beverage ingredient container expands from an initial state to a maximum expanded state during the beverage vend; and wherein when a second mode is selected from the plurality of modes, the body portion of the beverage ingredient container is prevented from expanding to the maximum expanded state during the beverage vend.

When the second mode is selected from the plurality of modes, the beverage ingredient container may expand from the initial state to an intermediate state during the beverage vend.

When the body portion of the beverage ingredient container is in the initial state, the cavity of the beverage ingredient container may have a first volume. When the body portion of the beverage ingredient container is in the maximum expanded state, the cavity of the beverage ingredient container may have a second volume. When the body portion of the beverage ingredient container is in the intermediate expanded state, the cavity of the beverage ingredient container may have a third volume. The third volume may be greater than the first volume and the second volume may be greater than the third volume.

When the first mode is selected from the plurality of modes, an expansion limiter of the beverage brewing apparatus may be in a first position that does not impede the expansion of the body portion of the beverage ingredient container from the initial state to the maximum expanded state during the beverage vend. When the second mode is selected from the plurality of modes, the expansion limiter of the beverage brewing apparatus may be in a second position that impedes the expansion of the body portion of the beverage ingredient container so that the body portion of the beverage ingredient container is prevented from expanding to the maximum expanded state during the beverage vend.

The expansion limiter may not be in contact with the beverage ingredient container at a start of the beverage vend in either of the first and second modes. The beverage ingredient container may expand to contact the expansion limiter in the second mode upon the body portion of the beverage ingredient container expanding to an intermediate expanded state. The expansion limiter may prevent expansion of the beverage ingredient container beyond the intermediate expanded state.

When the first mode is selected from the plurality of modes, the beverage ingredient container may expand to the maximum expanded state without contacting the expansion limiter.

The expansion limiter may comprise a first wall and a second wall that are spaced apart by a first distance when the first mode is selected and a second distance when the second mode is selected, the first distance being greater than the second distance.

At least one of the first and second walls may move towards the other one of the first and second walls when the second mode is selected. The at least one of the first and second walls may move away from the other one of the first and second walls when the first mode is selected.

In yet another embodiment, the invention may be a method of brewing a beverage comprising: jetting water into a cup containing a milk product via an injection nozzle of a beverage brewing apparatus to form a milk froth; inserting a beverage ingredient container into the beverage brewing apparatus, the beverage ingredient container comprising a body portion having a cavity containing a beverage ingredient; performing a beverage vend comprising introducing a liquid via a brewing nozzle of the beverage brewing apparatus into the cavity of the beverage ingredient container, the liquid mixing with the beverage ingredient in the cavity of the beverage ingredient container to form a beverage which exits through an outlet of the beverage ingredient container and mixes with the milk froth in the cup to form a final beverage product; and wherein expansion of the body portion of the beverage ingredient container is impeded during the beverage vend to increase an extraction concentration of the beverage ingredient in the beverage.

The expansion of the body portion of the beverage ingredient container may be impeded by an expansion limiter comprising a first wall and a second wall positioned on opposing sides of the beverage ingredient container to prevent the beverage ingredient container from expanding to a maximum expanded state during the beverage vend. The beverage ingredient container may not be compressed by the expansion limiter prior to a start of the beverage vend. The first and second walls of the expansion limiter may not be contact with the beverage ingredient container at a start of the beverage vend. During the beverage vend the beverage ingredient container may expand into contact with the first and second walls of the expansion limiter. The first and second walls of the expansion limiter may prevent the beverage ingredient container from reaching the maximum expanded state.

During the beverage vend the body portion of the beverage ingredient container may expand from an initial state whereby the cavity of the beverage ingredient container has a first volume to an intermediate expanded state whereby the cavity of the beverage ingredient has a second volume that is greater than the first volume, the second volume being less than a third volume associated with the beverage ingredient container in a maximum expanded state.

In a further aspect, the invention may be a beverage brewing system comprising: a beverage ingredient container comprising a body portion defining a cavity containing a beverage ingredient, the body portion of the beverage ingredient container being flexible so that, when the body portion of the beverage ingredient container is unimpeded during a beverage vend, the body portion expands from an initial state to a maximum expanded state; a beverage brewing apparatus comprising: a support member configured to support the beverage ingredient container during the beverage vend; and an expansion limiter comprising a first wall and a second wall that are positioned adjacent to opposing surfaces of the beverage ingredient container; and wherein prior to a start of the beverage vend, at least one of the first and second walls is spaced apart from the beverage ingredient container, and wherein during the beverage vend the beverage ingredient container expands into contact with each of the first and second walls, the first and second walls preventing the beverage ingredient container from expanding to the maximum expanded state.

In yet another aspect, the invention may be a beverage apparatus comprising: a support member configured to support a beverage ingredient container during a beverage vend; an expansion limiter comprising a first wall and a second wall that are configured to be positioned adjacent to opposing major surfaces of the beverage ingredient container during the beverage vend; and wherein the beverage brewing apparatus is operable to vend a beverage in: a first mode whereby the first and second walls are spaced apart by a first maximum distance; and a second mode whereby the first and second walls are spaced apart by a second maximum distance, the second maximum distance being less than the first maximum distance.

In still another aspect, the invention may be a beverage brewing system comprising: a beverage ingredient container comprising a body portion defining a cavity containing a beverage ingredient; a beverage brewing apparatus comprising: a support member configured to support the beverage ingredient container during a beverage vend; and an expansion limiter; wherein prior to initiating the beverage vend, the beverage ingredient container is configured to be supported by the support member so that at least a portion of an outer surface of the body portion of the beverage ingredient container is spaced apart from the expansion limiter; and wherein during the beverage vend a volume of the cavity of the body portion of the beverage ingredient container is configured to expand until the portion of the outer surface of the body portion of the beverage ingredient container contacts the expansion limiter to prevent further expansion of the volume of the cavity.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
FIG. 1 is a front perspective view of a beverage brewing apparatus in accordance with an embodiment of the present invention;
FIG. 2 is a front perspective view of a beverage ingredient container intended to be used in the beverage brewing apparatus to brew a beverage as a part of a beverage brewing system;
FIG. 3A is a cross-sectional view taken along line III of FIG. 2 with the beverage ingredient container in a sealed;
FIG. 3B is a cross-sectional view taken along line III of FIG. 2 with the beverage ingredient container in a use state during a beverage vend;
FIG. 4 is a close-up view illustrating the beverage ingredient container of FIG. 2 being inserted into the beverage brewing apparatus of FIG. 1;
FIG. 5 is a close-up view illustrating the beverage ingredient container of FIG. 2 being engaged with a support member of the beverage brewing apparatus of FIG. 1;
FIG. 6 is a cross-sectional view taken along line VI of FIG. 1;
FIG. 7A is a close-up view of area VII of FIG. 6 with the expansion limiter in a first position and the beverage ingredient container in an initial state prior to a beverage vend;
FIG. 7B is a close-up view of area VII of FIG. 6 with the expansion limiter in the first position and the beverage ingredient container in a maximum expanded state during a beverage vend;
FIG. 8A is a close-up view of area VII of FIG. 6 with the expansion limiter in a second position and the beverage ingredient container in an initial state prior to a beverage vend;
FIG. 8B is a close-up view of area VII of FIG. 6 with the expansion limiter in the second position and the beverage ingredient container in an intermediate expanded sate during a beverage vent;
FIG. 9 is a schematic flow diagram of the beverage brewing apparatus of FIG. 1;
FIGS. 10A and 10B are schematic illustrations of the beverage ingredient container of FIG. 2 in an initial and fully expanded state; and
FIGS. 10C and 10D are schematic illustrations of the beverage ingredient container of FIG. 2 in an initial and immediate expanded state, with the beverage ingredient container being at least partially bounded by first and second walls of expansion limiter.

### DETAILED DESCRIPTION

The following description of the preferred embodiment(s) is merely exemplary in nature and is in no way intended to limit the invention, its application, or uses.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivatives thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

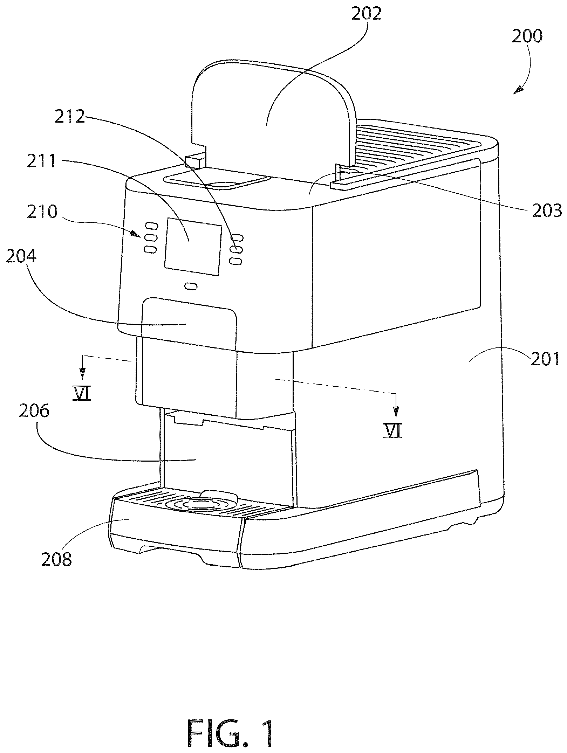

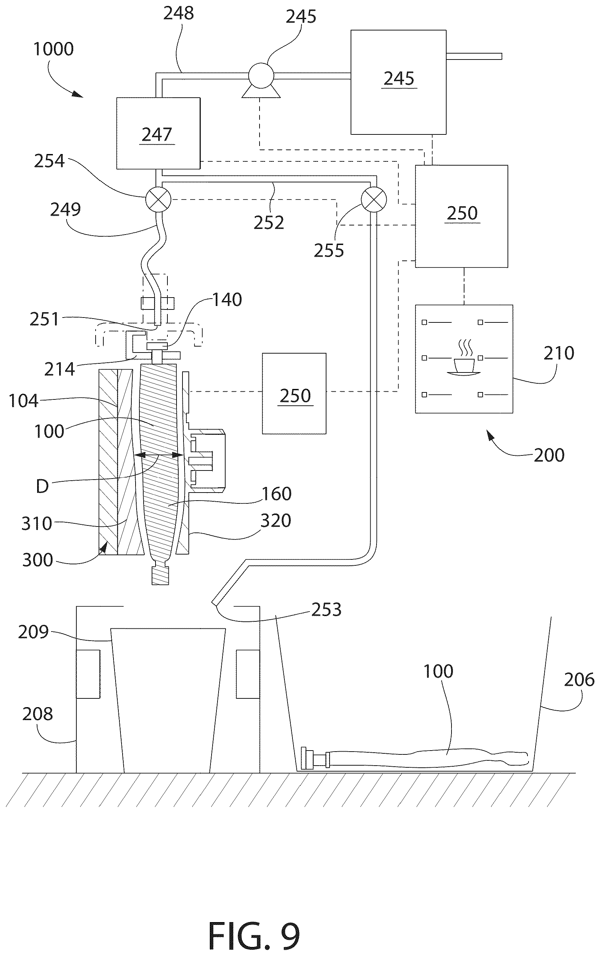

Referring to FIG. 1, a beverage brewing apparatus 200 is illustrated in accordance with an exemplary embodiment of the present invention. The beverage brewing apparatus 200 comprises a housing 201 that houses various fluid flow and electronic components of the beverage dispensing apparatus 200, some of which will be described below with reference to the schematic illustration of FIG. 9. The housing 201 may be formed from plastic or other rigid materials and may be designed with any desirable aesthetic, shape, and design. Some of the specific features of the beverage brewing apparatus 200 will be described herein, it being understood that other features and components necessary for the operation of the machine will be readily understood by persons skilled in the art.

The housing 201 of the beverage brewing apparatus 200 may contain a water tank within the interior of the housing 201 which stores or otherwise holds water that is used during operation of the beverage brewing apparatus 200 to brew a beverage during a beverage vend. In other embodiments, the beverage brewing apparatus 200 may not include such a water tank, and in such embodiments the beverage brewing apparatus 200 may be directly coupled to a mains water supply. In still other embodiments, the beverage brewing apparatus 200 may be fluidly coupled to a water tank or water supply which is positioned outside of the housing 201.

As used herein, a beverage vend describes an operation of the beverage brewing apparatus 200 whereby the beverage brewing apparatus 200 is used to brew or otherwise generate a beverage. Specifically, a beverage vend describes an operation of the beverage brewing apparatus 200 whereby water from the water tank (or from any other water source, including a mains water supply) is introduced into a beverage ingredient container held by the beverage brewing apparatus 200. The liquid introduced into the beverage ingredient container mixes with the beverage ingredient and then exits the beverage ingredient container through an outlet as a beverage (such as coffee, tea, or the like). The beverage exiting the beverage ingredient container may pass into a cup positioned below the beverage ingredient container. Additional liquid and/or water may be injected directly into the cup from the beverage brewing apparatus 200 without passing through the beverage ingredient container. Such a beverage vend will be described in greater detail below, with particular reference to FIG. 9.

In the exemplified embodiment, the water tank which is located within the housing 201 may be accessible via a lid 202 located on a top end 203 of the housing 201. Specifically, the lid 202 may be movable (pivotable, slidable, or the like) from a closed state to an open state to expose an inlet 205 through which a liquid such as water may be introduced into the water tank, which is located internally within the housing 201 and is therefore not visible in FIG. 1. Thus, a user may pour water into the inlet 205, and the water may then flow from the inlet 105 into the water tank for storage until needed for the brewing of a beverage. In some embodiments, the lid 202 may be omitted and the inlet 205 always exposed. However, the inclusion of the lid 202 may prevent unwanted substances and debris from entering the water tank. As noted above, the water tank may be a separate tank that is positioned adjacent to the housing 201 in some embodiments, and in such embodiments the inlet 205 may be omitted. The inlet 105 may also be omitted if a mains water supply is used instead of a water tank.

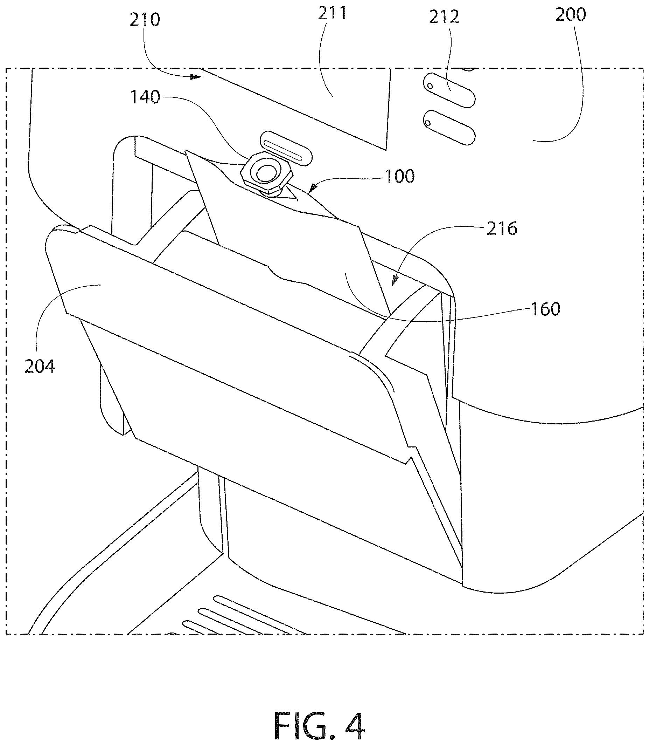

The beverage brewing apparatus 200 may also comprise a container compartment within which a beverage ingredient container containing a beverage ingredient may be positioned during the beverage vend. The housing 201 may comprise a door 204 which may be altered between a closed state as shown in FIG. 1 and an open state as shown in FIG. 4. The door 204 may be opened manually by a user or automatically by the beverage brewing apparatus 200 in response to user selection on the beverage brewing apparatus 200. When a user selects a beverage to be brewed, the door 204 may open so that a user can insert a beverage ingredient container into the container compartment. The user may then close the door 204 (or the door 204 may close automatically) so that a beverage vend may occur whereby a liquid, such as the water stored in the water tank, may be introduced into the beverage ingredient container for purposes of forming a beverage. The beverage ingredient container may be a single-use disposable beverage ingredient container in some embodiments.

The beverage brewing machine 200 may also comprise a cup holder station 208 upon which a user may position a cup during a beverage vend. Specifically, the liquid which is introduced into the beverage ingredient container may exit the beverage ingredient container through an outlet and then be introduced into the user's cup or other vessel type positioned on the cup holder station 208. The cup holder station 208 may also form a drip tray and as such the cup holder station 208 may comprise a grille which forms the support surface for supporting the cup or other vessel for receiving the beverage from the beverage brewing apparatus 200. The cup holder station 208 may also comprise a tray portion positioned beneath the grille for catching any spillage which passes through the grille. The beverage brewing machine 200 may include various nozzles, conduits, tubes, valves, and the like to facilitate its operation, some of which will be described below with reference to FIG. 9.

The beverage brewing apparatus 200 may further comprise a bin 206 which sits below the container compartment and receives beverage ingredient containers (i.e., sachets, capsules, or the like) after use. The beverage brewing machine 200 may include mechanisms and assemblies that are configured to automatically move the beverage ingredient container from the compartment to the bin 206 after a beverage vend cycle. The bin 206 may be positioned within a cavity formed in the housing 201 of the beverage brewing apparatus 200. The bin 206 may be removable from the housing 201 so that the used beverage ingredient containers collected therein may be periodically disposed by a user, operator, or caretaker in a disposal bin or trach can. Thus, the bin 206 may be a slidable drawer in some embodiments which is slidably inserted into and removed from the housing 201.

The beverage brewing apparatus 200 may further comprises a user interface 210. In the exemplified embodiment, the user interface 210 comprises a display screen 211 and a plurality of selection buttons 212. The display screen 211 may be a touch-activated screen in some embodiments, and in such embodiments the selection buttons 212 may be omitted (although they may still be included as well). The display screen 211 may display information to the user regarding beverage selection including beverage type selection, beverage size selection, beverage strength selection, and the like. The plurality of selection buttons 212 may allow a user to select beverage making parameters. The user can control the function and operation of the beverage brewing apparatus 200 by interacting with and/or actuating features on the display screen 211 and/or the selection buttons 212.

The appearance and design of the housing 201 and other features and components of the beverage brewing apparatus 200 are not to be limiting of the present invention, and are merely intended to be exemplary for purposes of illustrating such machine in accordance with an embodiment of the present invention. Thus, the invention claimed herein is not to be limited by the shape, size, or other ornamentation or industrial design features of the beverage brewing apparatus 200.

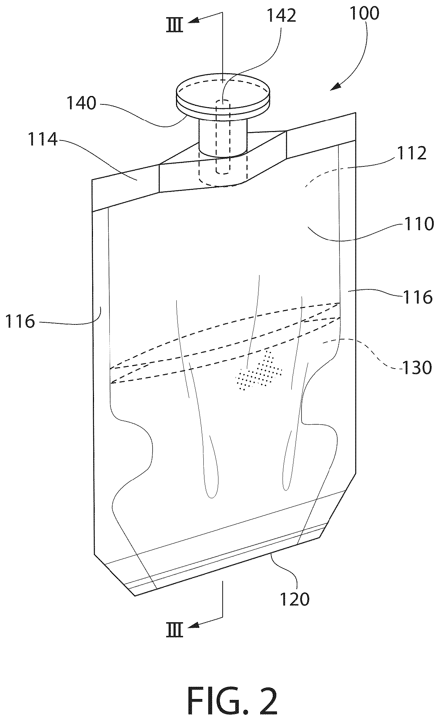

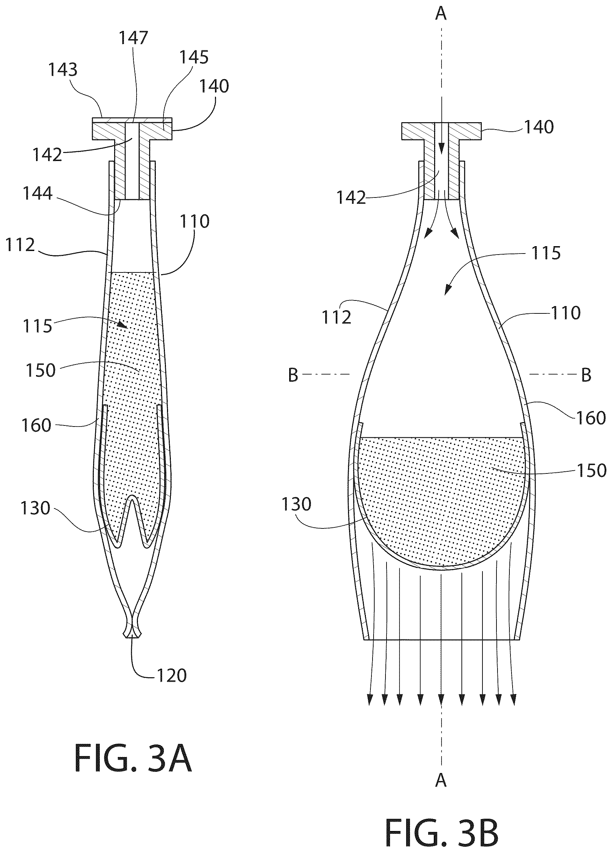

Referring to FIGS. 2 and 3A, a beverage ingredient container 100 will be described in accordance with an embodiment of the present invention. The beverage ingredient container 100 and the beverage brewing apparatus 200 may be referred to collectively herein as a beverage brewing system. This is because the beverage brewing apparatus 200 is configured to receive one of the beverage ingredient containers 100 to brew or otherwise generate a beverage using the beverage ingredient contained in the beverage ingredient container 100. Thus, in some embodiments the invention may be directed to a beverage brewing system which comprises the beverage brewing apparatus 200 and one or more of the beverage ingredient containers 100.

In the exemplified embodiment, the beverage ingredient container 100 may be in the form of a sachet. Thus, the beverage ingredient container 100 may comprise a body portion 160 which may comprise a front sheet 110 and a back or rear sheet 112 that are bonded together. The front and back sheets 110, 112 may be formed from a liquid- and air-impermeable sheet material. Furthermore, the front and back sheets 110, 112 may be formed from a flexible material, such that the front and back sheets 110, 112 may be folded, bent, or otherwise manipulated. The sheet or flexible film material may be a laminate comprising two or more of the following layers: a thermoplastic sealant layer for bonding the sheet to other members of the package; a substantially gas-impermeable barrier layer, which may be a metal film such as aluminum film or a gas-barrier polymer such as polyvinyl alcohol (PvOH); adhesion layers to improve adhesion between other layers of the laminate; structural layers, for example to provide puncture resistance; and/or a printing substrate layer. The structural layers could be made of polyolefins, polyester, nylons, or other polymers as is well known in the art. In one embodiment, the sheet material is a laminate comprising a layer of polypropylene and a layer of polyvinyl alcohol (PvOH). The sheet materials may comprise a transparent region to provide visibility of the contents of the beverage ingredient container 100.

The front and back sheets 110, 112 may be permanently bonded together around their side edges 116 and along at least a portion of their top edges 114 to form the beverage ingredient container 100. The front and back sheets 110, 112 may also be bonded together along a bottom edge 120 of the container. In some embodiments, the bond, or at least a portion of the bond, between the front and back sheets 110, 112 along the bottom edge 120 may be releasable under the effect of heat or pressure inside the beverage ingredient container 100. For example, the bonding of the bottom edge 120 may be by means of a pressure-sensitive adhesive so that upon introduction of a liquid into the interior of the beverage ingredient container 100, the bond between the front and back sheets 110, 112 along the bottom edge 120 or a portion thereof may be released so that the beverage may be released from the cavity of the beverage ingredient container 100 into the cup positioned below. The permanent bond along the sides 116 and the top 114 may be formed by adhesive, thermal welding, or other techniques. The inner surfaces of the front and back sheets 110, 112 may define a cavity 115 of the beverage ingredient container 100.

The beverage ingredient container 100 may also comprise a nozzle 140 which is coupled to the front and back sheets 110, 112 along the top edge 114. The nozzle 140 may comprise a tubular bore 142 extending therethrough from an exposed top surface 143 thereof to a bottom edge 144 thereof. There may be a seal member 147 positioned along the top surface 143 of the nozzle 140 to seal the beverage ingredient container 100 prior to use. The seal member 147 may be punctured either by the user or by the beverage brewing apparatus 200 before or during a beverage vend. The seal member 147 may be formed integrally with the nozzle 140 (out of plastic, for examples), or the seal member 147 may be a separate sheet, such as one formed from paper, foam, aluminum, or the like, which covers the exposed top surface 143 of the nozzle 140 (or at least an inlet opening located therealong).

The bottom edge 114 of the nozzle 140 may be positioned within or in fluid communication with the cavity 115 of the beverage ingredient container 100. Thus, any liquids introduced into an inlet of the tubular bore 142 at the top surface 143 will flow through the tubular bore 142 and into the cavity 115. The nozzle 140 may comprise a flange 145 to assist in locating the beverage ingredient container 100 correctly within the beverage brewing apparatus 200. In some embodiments, the beverage ingredient container 100 may be supported within the beverage brewing apparatus 200 by a support member of the beverage brewing apparatus 200 engaging the flange 145 of the nozzle 140, with the beverage ingredient container 100 hanging freely downwardly from the support member. The tubular bore 142 of the nozzle 140 may be sealed prior to use (by the seal member 147 or otherwise) in order to maintain the airtight freshness of the beverage ingredient container 100. The beverage brewing apparatus 200 may comprise a mechanism that punctures or otherwise opens the nozzle 140 so that liquid such as water may be introduced into the cavity 115 of the beverage ingredient container 100 through the tubular bore 142 of the nozzle 140.

The beverage ingredient container 100 may comprise a filter 130 located within the cavity 115. The filter 130 may be bonded to the inside walls or inner surfaces of each of the front and back sheets 110, 112. The filter 130 may extend across the cavity 115 and form a support surface upon which a beverage ingredient 150 is disposed. That is, the beverage ingredient container 100 may contain an amount of a beverage ingredient 150 therein, and the beverage ingredient 150 rests atop of the filter 130, which may be elevated above a floor of the cavity 115. The filter 130 may be configured with the W shape as shown in FIG. 3A, or it may take on other shapes within the cavity 115 prior to the introduction of a liquid into the cavity 115. The filter 130 may be a plastic or other non-porous material sheet having perforations therein that are sufficiently small to prevent the beverage ingredient 150 from passing therethrough while permitting a liquid to pass therethrough. Alternatively, the filter material 130 may be a porous material such as a filter paper material or the like which prevents the beverage ingredient 150 from passing therethrough while permitting a liquid to pass therethrough.

The beverage ingredient 150 may be an infusible beverage ingredient such as, for example without limitation, ground coffee or leaf tea. In some embodiments, the beverage ingredient container 100 may contain from 2 grams to about 25 grams of ground coffee, and more specifically from about 2 grams to about 12 grams of ground coffee.

As shown schematically in FIG. 3B, upon introduction of a liquid (i.e., hot water) through the nozzle bore 142, the beverage ingredient 150 contained in the container 100 is mixed with the liquid and a beverage is brewed due to the extraction of solids of the beverage ingredient 150 into the liquid. The bottom seam 120 of the container 100 may open under the effect of the heat and liquid pressure inside the beverage ingredient container 100 to define a beverage dispensing point or outlet of the cavity 115. The beverage passes through the filter 130 and then through the opening in the bottom end of the beverage ingredient container 100. The beverage may then be collected in a cup or other vessel located below, such as a cup positioned on the cup holder station 208 depicted in FIG. 1.

Moreover, as depicted in FIGS. 3A and 3B, as the liquid is introduced into the cavity 115 of the beverage ingredient container 100 during a beverage vend, the volume of the cavity 115 increases to accommodate the liquid. FIGS. 3A and 3B illustrate this increase in the volume in a potentially exaggerated manner. Nonetheless, the point is that as the liquid is introduced into the cavity 115, the front and rear sheets 110, 112 will spread apart to accommodate the liquid, which causes the volume of the cavity 115 to increase. Because the front and rear sheets 110, 112 are permanently bonded together along the sides 116, the beverage ingredient container 100 does not expand in the directions of the sides 116. Rather, the beverage ingredient container 100 expands in the direction between the front and rear sheets 110, 112. Stated another way, the cavity 115 comprises a cavity axis A-A. When the liquid is introduced into the cavity 115, the cavity 115 expands in the direction of an axis B-B which is perpendicular to cavity axis A-A and to the major surfaces (i.e., the inner and outer surfaces) of the front and rear sheets 110, 112.

As the volume of the cavity 115 increases, the depth of the bed of the beverage ingredient 150 decreases as the beverage ingredient 150 spreads out along the now larger volume of the cavity 115. Thus, if the volume of the cavity 115 increases and the depth of the bed of the beverage ingredient 150 decreases, the liquid does not travel through as much of the beverage ingredient 150 prior to exiting the beverage ingredient container 100. Thus, the greater the increase in the volume of the cavity 115 and the lesser the depth of the bed of the beverage ingredient 150, the less extraction of solids from the beverage ingredient that occurs (all other factors, such as pressure of the liquid being introduced into the beverage ingredient container 100, being equal). Thus, by controlling the expansion of the beverage ingredient container 100 and the volume of the cavity 115, the extraction of solids from the beverage ingredient 150, and therefore the strength of the brewed beverage for the same amount of liquid, may be controlled.

In some embodiments, the cavity 115 may have an initial volume of between 15ml and 25ml, more specifically between 18ml and 22ml, more specifically between 20ml and 21ml, and more specifically approximately 20.5ml when in the beverage ingredient container 100 is in its initial, non-expanded state, as shown in FIG. 3A. That is, prior to introduction of any liquid into the cavity 115, the volume of the cavity 115 may be in the ranges provided for the initial volume. As the beverage ingredient container 100 may be sealed prior to use, in some embodiments the volume of the cavity 115 may not be adjusted prior to use (prior to unsealing the beverage ingredient container 100, such as by puncturing a hole in the nozzle or the like).

In some embodiments, the cavity 115 may have a maximum volume of between 50ml and 100ml, more specifically between 60ml and 90ml, more specifically between 65ml and 80ml, more specifically between 70ml and 75ml, more specifically between 73ml and 74ml, and more specifically approximately 73.2ml when in the fully expanded state, as shown in FIG. 3B. That is, at the maximum expansion of the beverage ingredient container 100, the volume may be in the ranges provided for the maximum volume. In some embodiments, a ratio of the expanded volume to the non-expanded (i.e., initial) volume may be between 3:1 and 4:1.

During a beverage vend, the volume of the cavity 115 is configured to expand from the initial volume (FIG. 3A) to the maximum expanded volume (FIG. 3B), so long as the beverage ingredient container 100, or the body portion 160 thereof, is not impeded during the beverage vend. The maximum expanded state is the maximum expansion of the body portion 160 of the beverage ingredient container 100 and therefore of the volume of the cavity 115 which the beverage ingredient container 100 is capable of achieving without the front and back sheets 110, 112 separating along one of the bonds or without some opening being formed through the body portion 160 of the beverage ingredient container 100. If the beverage ingredient container 100, or the body portion thereof 160, is impeded during the beverage vend, the beverage ingredient container 100 may be prevented from reaching the maximum volume or the maximum expanded state. This may be a desired outcome for some beverage vends as will be described herein.

During a beverage vend, the liquid which is introduced into the cavity 115 dissolves or extracts a portion of the beverage ingredient 150 that is positioned in the cavity 115 to form the final beverage which is provided to the user for consumption. There may be situations where it is desirable to make a stronger or more concentrated beverage using the beverage ingredient container 100 and the beverage brewing apparatus 200 (which collectively form a beverage brewing system, as noted herein). By preventing the beverage ingredient container 100 from reaching its maximum expanded state, the bed of the beverage ingredient 150 may be deeper, requiring the liquid/water to pass through more of the beverage ingredient 150 before exiting the cavity 150, which may result in a higher concentration of extracted or dissolved solids in the beverage and/or may allow for a larger drink volume without dilution and/or may allow for beverage making with less gram weight of ingredient.

Restricting the expansion of the body portion 160 of the beverage ingredient container 100 (and hence also restricting the expansion or increase in the volume of the cavity 115 of the beverage ingredient container 100) may facilitate an increase in the extraction of the beverage ingredient 150. This may help to support the delivery of higher volume beverages without increasing the amount or gram weight of the beverage ingredient 150 in the cavity 150, support the delivery of a stronger beverage, as measured by the total dissolved solids, and enable more efficient use of the beverage ingredient, such as by achieving a desired taste profile with a lower gram weight of the beverage ingredient 150.

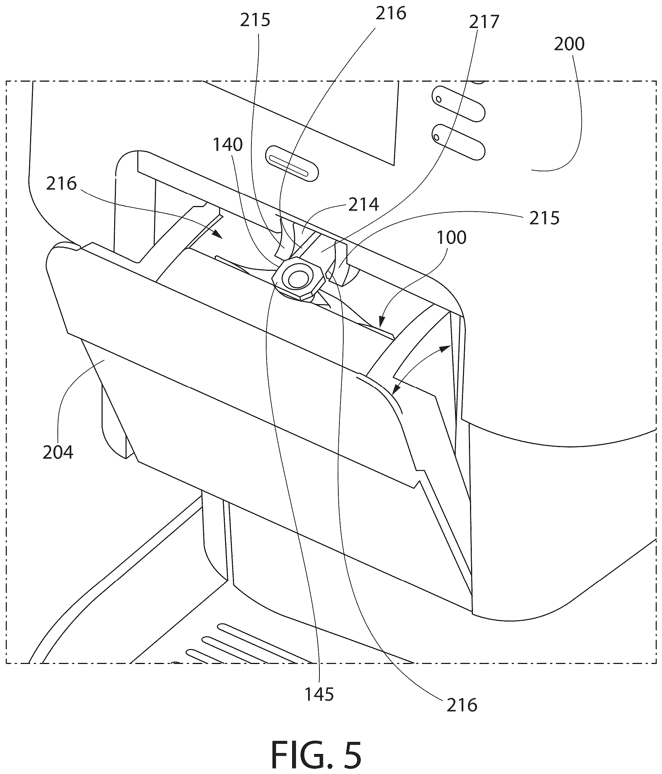

Referring to FIGS. 4 and 5, the engagement between the beverage brewing apparatus 200 and the beverage ingredient container 100 will be described in accordance with an embodiment of the present invention. In some embodiments, a user may select certain drink parameters using the user interface 210, either by engagement with the display screen 211, engagement with the selection buttons 212, or some combination of both. Upon the user selecting drink or beverage parameters, in some embodiments the door 204 may automatically be altered from the closed state as shown in FIG. 1 to the open state as shown in FIG. 4. The user may then slide the beverage ingredient container 100 into the slot 216 that is formed between the door 204 and the housing 201 of the beverage brewing apparatus 200.

As best shown in FIG. 5, the beverage brewing apparatus 200 may comprise a support member 214 located along an upper portion of the slot 216. The support member 214 may comprise a pair of arms 215 that are spaced apart by a gap 217 which is sized and configured to receive a neck portion of the nozzle 140 of the beverage ingredient container 100. That is, the neck portion of the nozzle 140 is slid into the gap 217 between the pair of arms 215 of the support member 214 and the flange 145 of the nozzle 140 rests atop of ledges 216 of the pair of arms 215. The beverage ingredient container 100 is thereby supported within the slot 216 by the engagement of the support member 214 of the beverage brewing apparatus 200 with the nozzle 140 of the beverage ingredient container 100. In some embodiments, the support member 214 may support the beverage ingredient container 100 by the nozzle 140 so that the body portion 160 of the beverage ingredient container 100 may hang freely from the support member 214. Upon the beverage ingredient container 100 being supported by the support member 214, the door 204 may be closed manually by the user or automatically.

While one embodiment is provided to illustrate the manner in which the beverage brewing apparatus 200 supports the beverage ingredient container 100 during a beverage vend, the invention is not to be so limited in all embodiments. The beverage ingredient container 100 may be supported within the beverage brewing apparatus 200 in other ways, such as by positioning the beverage ingredient container 100 within a dedicated compartment within the beverage brewing apparatus 200, or the like. In some embodiment, the beverage ingredient container 100 may be supported within the beverage brewing apparatus 200 so that in at least some modes of operation of the beverage brewing apparatus 200 the body portion 160 of the beverage ingredient container 100 is not impeded from expanding as described herein above.

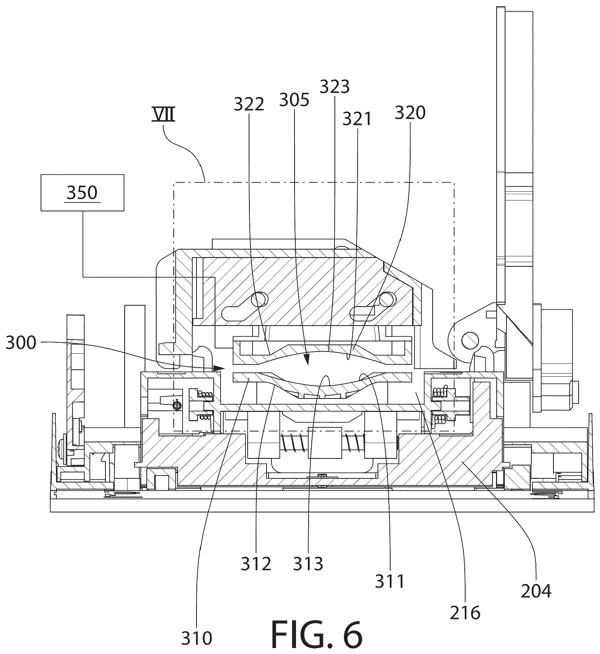

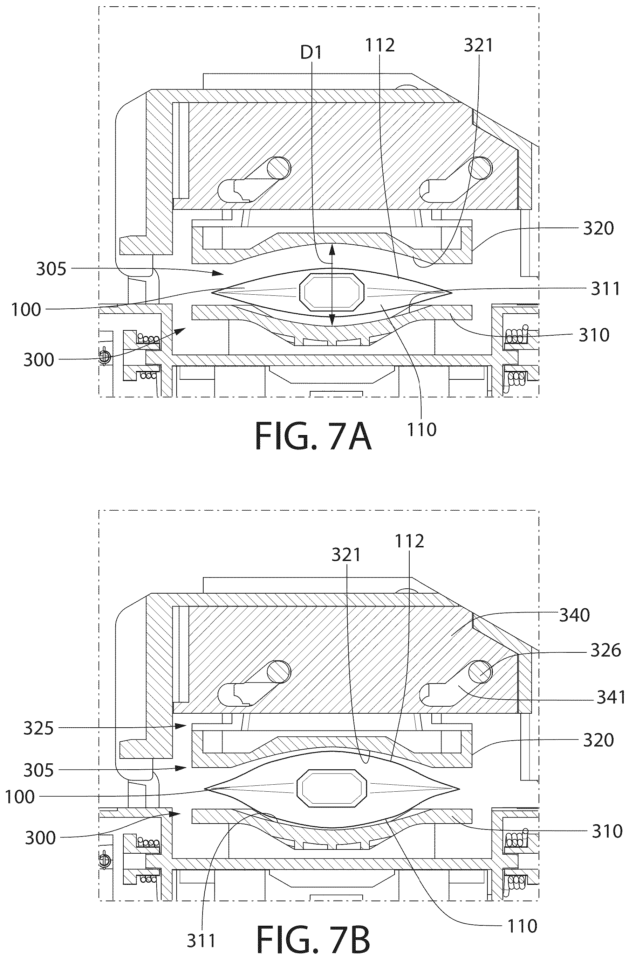

FIG. 6 is a partial cross-sectional view taken along line VI of FIG. 1 in accordance with an embodiment of the present invention. The section is partial in that it does not extend all the way to the rear of the beverage brewing apparatus 200, but instead focuses only on areas of importance within the context of the invention described herein.. In FIG. 6, the door 204 is visible, along with additional features associated with the containment of the beverage ingredient container 100 within the beverage brewing apparatus 200 during a beverage vend. The beverage ingredient container 100 is not depicted in FIG. 6, but is depicted in similar views in FIGS. 7A-8B described below. The beverage ingredient container 100 may be positioned within the beverage brewing apparatus 200 with the front face of the beverage ingredient container 100 facing out (i.e., towards the user or towards the front of the machine) or with an edge of the beverage ingredient container 100 facing out (i.e., towards the user or towards the front of the machine).

The beverage brewing apparatus 200 comprises an expansion limiter 300 which may be operable to limit the expansion of the beverage ingredient container 100 in some modes of operation of the beverage brewing apparatus 200. The expansion limiter 300 may be located within the region of the slot 216 so that it may engage with the beverage ingredient container 100 in some modes of operation of the beverage brewing apparatus 200. In the exemplified embodiment, the expansion limiter 300 comprises a first wall 310 and a second wall 320 that are spaced apart by a gap to define a chamber 305 within which the beverage ingredient container 100 may be located during the beverage vend. However, in embodiments of the invention described herein, the chamber 305 may not be a fully enclosed space or cavity. Rather, the chamber 305 is simply the space defined between the first and second walls 310, 320 of the expansion limiter 300. In some embodiments, the chamber 305 may be open along the top, the bottom, and/or the lateral sides. In other embodiments, the chamber 305 may be closed along one or all of the top, the bottom, and the lateral sides. Thus, the chamber 305 may be a fully enclosed chamber, a partially enclosed chamber, or a chamber which is open on all sides (i.e., along its entire periphery). In any such embodiment, the beverage ingredient container 100 is configured to fit within the chamber 305 during a beverage vend. In FIG. 6, it can be seen that the chamber 305 is open along both of its lateral sides. The chamber 305 may also be open at its top and bottom, such as depicted in FIG. 9 described below.

The expansion limiter 300, or portions thereof, may be removable from the housing 201 in some embodiments. In an embodiment, the first wall 310 of the expansion limiter 300 may be removable, in an embodiment the second wall 320 of the expansion limiter 300 may be removable, and in an embodiment both of the first and second walls 310, 320 may be removable. In other embodiments, the expansion limiter 300 (i.e., the first and second walls 310, 320) may not be removable from the housing 201.

In the exemplified embodiment, the first wall 310 is fixedly coupled to the door 204. Thus, as the door 204 pivots open and closed, the first wall 310 may pivot along with the door 204. The invention is not to be so limited in all embodiments and the first wall 310 may be fixed to other parts of the housing 201 rather than to the door 204 in other embodiments. In the exemplified embodiment, the first wall 310 is non-movable relative to the door 204. In other embodiments, the first wall 310 may be configured to move relative to the door 204 in a direction towards and away from the second wall 320 for purposes of modifying the size of the chamber 305 defined by the expansion limiter 300. The first wall 310 has an inner surface 311 that faces the chamber 305 and an outer surface 312 that faces the door 204. The inner surface 311 of the first wall 310 comprises a concave portion 313 which is configured to be in alignment with the beverage ingredient container 100 when the beverage ingredient container 100 is positioned within the chamber 305 during a beverage vend.

In the exemplified embodiment, the second wall 320 is configured to be movable relative to the first wall 310 in a direction towards and away from the first wall 310 for purposes of increasing and decreasing the size of the gap between the first and second walls 320. Of course, in other embodiments the first wall 310 may be movable and the second wall 320 may be fixed and non-movable. In still other embodiments, both of the first and second walls 310, 320 may be configured to be movable towards and away from one another to adjust the size of the chamber 305. In the exemplified embodiment, the movement of the second wall 320 is achieved by a pin-slot joint. That is, there is a pin coupled to the second wall 320 which nests within a slot formed into a plate that is distinct from the second wall 320. In other embodiments, the second wall 320 may comprise the slot and the plate may comprise the pin. In either case, as the second wall 320 moves towards and away from the first wall 310, the pin moves within the slot. Other movement mechanisms and engagement features may be used in other embodiments. The beverage brewing apparatus 200 may include a motor or other drive mechanism to control the movement of the second wall 320 relative to the first wall 310. A generic drive mechanism 350 is illustrated in FIG. 6 operably coupled to the second wall 320 to control the movement of the second wall 320 towards and away from the first wall 310 as described herein.

The second wall 320 has an inner surface 321 which faces the first wall 310 and an outer surface 322 which faces away from the first wall 310. The inner surface 321 comprises a concave portion 323 which is configured to be in alignment with the concave portion 313 of the first wall 310 and with the beverage ingredient container 100 when the beverage ingredient container 100 is positioned in the chamber 305 during a beverage vend.

In FIG. 6, the first and second walls 310, 320 are spaced apart from one another such that no portion of the first and second walls 310, 320 contacts the other. As described herein, the beverage brewing apparatus 200 may operate in a selected one of a plurality of modes. In some embodiments, the first and second walls 310, 320 of the expansion limiter 300 may be entirely spaced apart from one another in several, or all, of the modes such that no portion of the first wall 310 is in contact with the second wall 320 and vice versa. However, if one of the first and second walls 310, 320 were to be moved towards the other, it is possible that the peripheral portions of the first and second walls 310, 320 could be in contact with one another while the central portions (which comprise the concave portions 313, 323) remain spaced apart from one another. Thus, in certain embodiments the first and second walls 310, 320 may be at least partially spaced apart from one another by a gap, even if some parts of the first and second walls 310, 320 are in contact with one another.

Each of the first and second walls 310, 320 of the expansion limiter 300 may be formed from a rigid and non-flexible material. Such rigid materials may include hard plastics, metal, or other materials having similar rigidity. In some embodiments, the first and second walls 310, 320 may be formed from a non-compressible material so that upon a force acting thereupon, the first and second walls 310, 320 do not compress. The point is that in some exemplary embodiments, the first and second walls 310, 320 are not formed and do not comprise any flexible or resilient materials such as rubber, elastomer, foam, or the like. Thus, the inner surfaces 311, 321 of the first and second walls 310, 320 may be rigid, non-flexible, and non-compressible. In other embodiments, the first and second walls 310, 320 and/or the inner surfaces 311, 321 thereof may comprise or be formed of flexible or non-rigid or compressible materials, so long as it does not detract from the ability of the expansion limiter 300 to perform the functions described herein.

As noted above, the beverage brewing apparatus 200 may be operable to vend a beverage in a plurality of different modes. In particular, a user may select from a plurality of modes using the user interface as described herein. Possible modes of operation includes a standard or regular vend and a modified vend, with the modified vend being selected from any one of an enhanced strength vend, an increased volume vend, a froth-my-milk vend, or the like. In a standard or regular vend, liquid such as water may be introduced into the beverage ingredient container 100 at a pressure of around 0.5 bar to 1.0 bar. In a standard or regular vend, the beverage ingredient container 100 may be permitted to expand to its maximum volume during the beverage vend, as described in more detail herein. This is a traditional type of vend where the expansion limiter 300 does not impede the ability of the body portion 160 of the beverage ingredient container 100 to expand to its maximum volume or maximum expanded state.

In one or more of the modified vends, the liquid may be introduced into the beverage ingredient container 100 at a pressure of between 1.0 bar and 1.5 bar, although the invention is not limited to this in all embodiments and the pressure may be the same as the regular vend in other embodiments. In the modified vend, the expansion limiter 300 may impede the ability of the body portion 160 of the beverage ingredient container 100 to expand to its maximum expanded state. The expansion limiter 300 may permit the beverage ingredient 100 to expand to an intermediate expanded state whereby the cavity 115 has a volume which is greater than the initial volume but less than the maximum expanded volume. In other embodiments, the expansion limiter 300 may substantially prevent any expansion of the beverage ingredient container 100 in the modified vend. The modified vend may be desired for several purposes. For example, the modified vend may allow for the delivery of a higher volume beverage without increasing the gram weight of the beverage ingredient in the beverage ingredient container 100 while maintaining the same taste profile and/or beverage strength. In particular, in the modified vend the bed of the beverage ingredient 150 in the beverage ingredient container 100 is deeper than in the regular vend, which results in the same volume of beverage ingredient being distributed over a smaller area to increase the level of extraction. As such, this allows a larger volume beverage to be vended without decreasing the strength and changing the taste profile.

In another specific example, the beverage brewing apparatus 200 may allow a user to use his or her own milk product in the drink. For example, the user may select a beverage to be brewed, and the machine may instruct the user to place a cup with a specific amount (3 ounces, for example) of a milk of his or her choice thereon on the cup holder station 208. The milk may be cow's milk, oat milk, almond milk, soy milk, coconut milk, rice milk, cashew milk, macadamia milk, hemp milk, quinoa milk, or any other type of dairy or non-dairy milk product now available or later discovered.

The beverage brewing apparatus 200 may then jet an amount of water into the milk to create a milk froth. The term "jet" means to introduce water into the milk at a high pressure stream, for example, at a pressure of around 1-1.5 bar, although it could be higher in other embodiments. Thus, the term "jet" may be a pressure of 1 bar or more. In some embodiments, an additional 3 ounces of water may be jetted into the 3 ounces of milk. Finally, in such a beverage 3-5 ounces of coffee may be vended into the cup. If the beverage ingredient container 100 were allowed to expand to its fully expanded state, that 3-5 ounces of coffee, once mixed with the milk froth, would result in a diluted, low strength coffee beverage (final beverage product). By limiting the expansion of the beverage ingredient container 100 and increasing the depth of the beverage ingredient 150 therein, the 3-5 ounces of water introduced into the beverage ingredient container 100 will generate a stronger three ounce coffee product which is added to the three ounces of milk and three ounces of water already in the cup. Such stronger coffee product may be needed to ensure that the final drink does not have a significantly reduced strength owing to the dilution caused by the milk and water used to create the milk froth in the initial steps. Thus, limiting the expansion of the beverage ingredient container 100 increases the extraction concentration of the beverage ingredient 150 during the short vend of 3-5 ounces. This concentrated coffee beverage then mixes with the water previously introduced into the cup as part of the milk frothing process to reduce the overall concentration to palatable levels while being an improvement over a product which did not generate the increased extraction concentration coffee product.

In still another embodiment, the beverage brewing apparatus 200 may allow a small volume of a high strength beverage to be brewed, followed by introducing plain water to the high strength beverage to reduce the strength to more typical values. In particular, with the beverage ingredient container 100 constrained by the expansion limiter, a higher strength beverage may be brewed having a volume of approximately 6 ounces. Then, an additional 3 ounces may be added to the brewed beverage to reduce the strength thereby creating a 9 ounce beverage with a desired taste profile. These techniques may also be used to create a beverage having the same taste profile as expected with a greater volume without increasing the volume of the beverage ingredient in the beverage ingredient container 100.

Referring to FIGS. 7A and 7B, the cross-section from FIG. 6 is shown with one of the beverage ingredient containers 100 in the chamber 305 of the expansion limiter 300 both before the start of the beverage vend (FIG. 7A) and during or after the beverage vend (FIG. 7B). As noted above, the beverage ingredient container 100 is positioned in the chamber 305 or the gap which exists between the inner surfaces 311, 321 of the first and second walls 310, 320 of the expansion limiter 300. The beverage ingredient container 100 is positioned so that the first wall 310 faces the front sheet 110 or the front surface of the beverage ingredient container 100 and the second wall 320 faces the second sheet 112 of the rear surface of the beverage ingredient container 100. FIGS. 7A and 7B illustrate the positioning of the first and second walls 310, 320 of the expansion limiter 300 when the beverage brewing apparatus 200 is operating in accordance with a first mode of operation (which may be a regular or standard vend as described herein). In the first mode, it is desired to enable the beverage ingredient container 100 to reach its maximum expanded state during the beverage vend without the expansion limiter 300 impeding this expansion of the beverage ingredient container 100. In FIGS. 7A and 7B, the first and second walls 310, 320 are spaced apart from one another by a first maximum distance D1.

In the exemplified embodiment, as shown in FIG. 7A, at the start of the beverage vend (or before the water begins being introduced into the cavity of the beverage ingredient container 100), neither of the first and second walls 310, 320 of the expansion limiter 300 is in contact with the beverage ingredient container 100. In the exemplified embodiment, when the beverage brewing apparatus 200 is operating in accordance with the first mode, the minimum distance between either of the first and second walls 310, 320 and the beverage ingredient container 100 may be between 10mm and 20mm, or between 13mm and 18mm, although greater distances may be possible in some embodiments. Furthermore, as shown in FIG. 7B, during or at the end of the beverage vend, none of the first and second walls 310, 320 of the expansion limiter 300 is in contact with the beverage ingredient container 100. In FIG. 7B, the beverage ingredient container 100 has expanded in the direction between the front/rear walls 110, 112, but the beverage ingredient container 100 is still spaced from the first and second walls 310, 320 of the expansion limiter 300. Thus, the beverage ingredient container 100 is permitted to expand from its initial state whereby the cavity has an initial volume to its maximum expanded state whereby the cavity has a maximum volume. In the first mode of operation, the expansion limiter 300 does not impede the expansion of the beverage ingredient container 100 at any time during the beverage vend. Thus, the volume of the cavity of the beverage ingredient container is permitted to expand from its initial volume (approximately 20.5ml, although ranges are provided above) to its maximum expanded volume (approximately 73ml, although ranges are provided above) in the first mode.

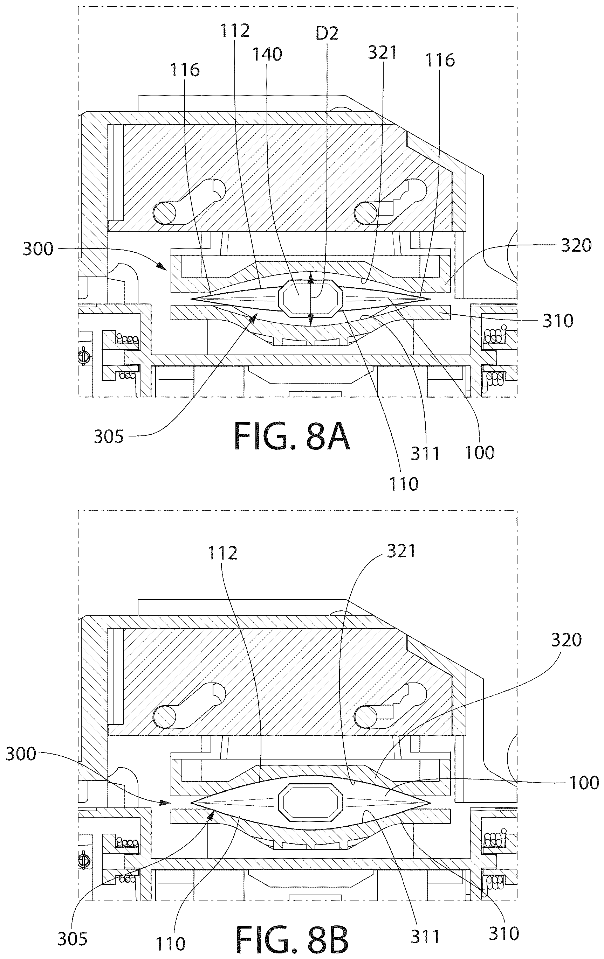

FIGS. 8A and 8B illustrate the positional relationship between the first and second walls 310, 320 of the expansion limiter 300 and the beverage ingredient container 100 when the beverage brewing apparatus 100 is operating in accordance with a second mode of operation. In the second mode, it is desired to prevent the beverage ingredient container 100 from expanding to its maximum expanded state, although some expansion may be permitted. As shown in FIGS. 8A and 8B, when the beverage brewing apparatus 200 is operating in accordance with the second mode of operation, the first and second walls 310, 320 of the expansion limiter 300 are spaced apart from one another by a second maximum distance D2. The second maximum distance D2 is less than the first maximum distance D1 measured between the first and second walls 310, 320 when the beverage brewing apparatus 200 is operating in accordance with the first mode of operation. In some embodiments, this may be achieved by moving the second wall 320 closer to the first wall 310, or by moving the first wall 310 closer to the second wall 320, or by moving both of the first and second walls 310, 320 closer to each other.

In moving from the position shown in FIGS. 7A and 7B to the position shown in FIGS. 8A and 8B, in one embodiment the second wall 320 moves closer to the first wall 310. There may be a second wall assembly 325 which comprises the second wall 320 and one or more follower members 326 that are coupled to the second wall 320. The second wall 320 and the follower members 326 may be connected as part of an unitary component. The follower members 326 may be positioned within corresponding slots 341 in a support plate 340. Thus, as the second wall 320 moves, the follower members 326 move within the slots 341 to maintain appropriate alignment of the second wall 320 with the first wall 310. A motor and actuator of any type may be coupled to the second wall 320 to facilitate the movement thereof, including a gear system, pneumatics, hydraulics, or the like. These follower members 326, the support plate 340, and the slots 341 are shown in each of FIGS. 7A, 7B, 8A, and 8B, but only labeled in FIG. 7B.

In the second mode of operation, the first and second walls 310, 320 may not be in contact with the beverage ingredient container 100 at the start of the beverage vend (FIG. 8A). Thus, while the first and second walls 310, 320 are intended to limit the ability of the beverage ingredient container 100 to expand when the beverage brewing apparatus 200 is operating in accordance with the second mode of operation, the first and second walls 310, 320 are not required to contact and/or clamp the beverage ingredient container 100 in the chamber 305. This may be beneficial in that by not requiring the first and second walls 310, 320 to be in contact with the beverage ingredient container 100 at the start of the beverage vend, no preload is required. This may simplify the mechanical construction as compared to other beverage machines of this type. In alternative embodiments, at least one of the first and second walls 310, 320 may be in contact with the beverage ingredient container 100 at this initial step in the second mode.

While some minimal contact between one or both of the first and second walls 310, 320 and the beverage ingredient container 100 may occur in some embodiments, there may be no forceful contact, no clamping, and no compression acting upon the beverage ingredient container 100 That is, the first and second walls 310, 320 of the expansion limiter 300 may not be in compressive contact with the body portion 160 of the beverage ingredient container 100 at the start of the beverage vend. This means that the first and second walls 310, 320 may not be applying a compressive force onto the body portion 160 of the beverage ingredient container 100, which enables the beverage ingredient container 100 to expand somewhat (either to the maximum expanded state or to some intermediate expanded state) during the beverage vend. There is no pre-loaded force being applied onto the beverage ingredient container 100 by the first and second walls 310, 320 prior to the start of the beverage vend. In the exemplified embodiment, the first and second walls 310, 320 also may not, and/or need not, contact the beverage ingredient container 100 along the bonded sides 116. This allows for greater tolerances in the manufacture of the beverage ingredient container 100 with regard to the precise positioning of the nozzle 140 and also removes any requirement for a pre-load as noted above.

In this second mode, at the start of the beverage vend, the first and second walls 310, 320 may be spaced apart from the outermost surfaces of the beverage ingredient container 100 by a distance of between 1mm and 10mm, more specifically between 3mm and 8mm, and more specifically between 4mm and 7mm. As noted above, in the first mode this distance was in the 10mm to 20mm range. Thus, it can be appreciated that there is much less space between the first and second walls 310, 320 and the beverage ingredient container 100 for the beverage ingredient container 100 to expand during the beverage vend in the second mode as compared to the first mode. Moreover, this space between the first and second walls 310, 320 and the outer surface of the beverage ingredient container 100 may be de minimis in the second mode in some embodiments. However, there is little or no pre-load between the first and second walls 310, 320 and the beverage ingredient container 100 in the second mode at the start of the beverage vend due to this space, which exists at least in part due to the concave profiling of the inner surfaces 311, 321 of the first and second walls 310, 320.

FIG. 8B illustrates the situation during or at the end of the beverage vend in the second mode. In particular, as the liquid is introduced into the cavity of the beverage ingredient container 100, the beverage ingredient container 100 begins to expand. However, due to the placement/positioning of the first and second walls 310, 320 of the expansion limiter 300, the beverage ingredient container 100 is prevented from reaching its maximum expanded state. Instead, upon reaching an intermediate expanded state, the beverage ingredient container 100 abuts against the first and second walls 310, 320 of the expansion limiter 300, which prevent further expansion of the beverage ingredient container 100. In the intermediate expanded state, the cavity of the beverage ingredient container 100 has a volume which is the same as or greater than the initial volume, but less than the maximum volume that the cavity could reach if the expansion limiter 300 did not impede the expansion.

In FIG. 8B, the conformal surface contact between the inner surfaces 311, 321 of the first and second walls 310, 320 of the expansion limiter 300 with the outer surface of the front and rear sheets 110, 112 of the beverage ingredient container 100 is shown. It can be readily seen that the expansion of the beverage ingredient container 100 in FIG. 8B is less than in FIG. 7B, which shows that the beverage ingredient container 100 is prevented from reaching its maximum expanded state. Once the beverage ingredient container 100 reaches the intermediate expanded state, the beverage ingredient container 100 is prevented from expanding further and the brewing process will continue with the beverage ingredient container 100 being maintained in the intermediate expanded state.

It should be appreciated that in each of the first and second modes, the first and second walls 310, 320 may be in a fixed position once the beverage vend begins. That is, after the start of the beverage vend, the first and second walls 310, 320 may not move relative to one another. The only reason that the distance between the walls 310, 320 and the beverage ingredient container 100 decreases during the beverage vend is due to the expansion of the beverage ingredient container 100; it is not due to any movement of the first and second walls 310, 320. The first and/or second walls only move prior to the beverage vend to get into the proper position associated with the mode selected by the user as described herein.

Referring to FIG. 9, a schematic flow diagram for a beverage brewing system 1000 which comprises the beverage brewing apparatus 200 and one of the beverage ingredient containers 100 is illustrated. The beverage brewing apparatus 200 may comprise a water tank 245, a pump 246, a heater 247, a conduit 248 extending from the water tank 245 to the heater 247, a brewing conduit 249 extending from the heater 247 to a brewing nozzle 251, and a jetting conduit 252 extending from the heater 247 to a jetting nozzle 253. A first valve 254 may be located along the brewing conduit 249 and a second valve 255 may be located along the jetting conduit 252 so that the first and second valves 254, 255 can be opened and closed to allow and prevent flow of the water from the water tank 245 to the brewing nozzle 251 and to the jetting nozzle 253, respectively.

The bin 206 is depicted with a used one of the beverage ingredient containers 100 located therein. Furthermore, the cup holder station 208 is depicted with a cup 209 positioned thereon, beneath the jetting nozzle 253 and the outlet of the beverage ingredient container 100 which is loaded in the beverage brewing apparatus 200.

The beverage brewing apparatus 200 comprises a control system 250 which is operably coupled to the user interface 210, the pump 246, the first and second valves 254, 255, and to the drive system 350 which is coupled to and configured to move the second wall 320 of the expansion limiter 300. Thus, upon a user selecting a beverage or beverage parameters on the user interface 210, the beverage brewing machine 200 can control the operation of the valves, pumps, heater, and the like to operate in accordance with the selected mode. For example, if the first mode is selected, the control system 250 will move the second wall 320 relative to the first wall 310 to increase the distance between the first and second walls 310, 320 so that they do not impede the expansion of the beverage ingredient container 100 during brewing. The control system 250 will then open the first valve 254 and activate the pump 246 so that water is pumped from the water tank 245 to the brewing nozzle 251 where the water can pass into the cavity of the beverage ingredient container 100 and then out through the bottom of the beverage ingredient container 100 into the cup positioned below.

If the second mode is selected, the control system 250 (via the drive mechanism 350) may move the second wall 320 closer to the first wall 310 to decrease the distance between the first and second walls 310, 320 so that they impede the expansion of the beverage ingredient contain during brewing. The control system may then first open the second valve 255 so that water from the water tank 245 may be injected out of the jetting nozzle 253 to froth any milk within the cup 209. Then the control system 250 may close the second valve 255 and open the first valve 249 to allow the water to flow from the water tank 245 through the brewing nozzle 251, into the beverage ingredient container 100, and then out the bottom of the beverage ingredient container 100 in the cup 209 positioned below.

FIG. 9 illustrates the first and second walls 310, 320 of the expansion limiter 300 in the position of the second mode whereby the first and second walls 310, 320 are spaced apart by the second maximum distance D2. As water is introduced into the cavity of the beverage ingredient container 100, the beverage ingredient container 100 will expand until it contacts the first and second walls 310, 320, at which point the beverage ingredient container 100 is prevented from expanding further.

In this view, it can be seen that the first and second walls 310, 320 are positioned in alignment with the body portion 160 of the beverage ingredient container 100. The first and second walls 310, 320 are elongated in a direction of the longitudinal axis of the beverage ingredient container 100, which extends between the bottom and top ends of the beverage ingredient container 100. The first and second walls 310, 320 are not in contact at the top or bottom (just like they are not in contact at the lateral sides as shown in the previous views). Thus, the first and second walls 310, 320 extend alongside the beverage ingredient container 100, but the first and second walls 310, 320 do not form an enclosed chamber within which the beverage ingredient container 100 is held. As discussed above, even in the second mode whereby the walls 310, 320 are closer together, there may be no contact between the first and second walls 310, 320 and the beverage ingredient container 100 at the start of the beverage vend. Any contact between the first and second walls 310,3 20 and the beverage ingredient container 100 at the start of the beverage vend would be minimal; there is no pre-load or compressive force applied onto the beverage ingredient container 100 by the first and/or second walls 310, 320 prior to the initiation of the beverage vend and the resultant expansion of the body portion 160 of the beverage ingredient container 100.

With continued reference to FIG. 9, operation of the beverage brewing system 1000 (e.g., methods of brewing a beverage) will be described in accordance with exemplary embodiments. In one embodiment, at a first step, a user will select one of a plurality of brewing modes for a beverage vend using the user interface 210 of the beverage brewing apparatus 200. Upon selection of the mode, the first and second walls 310, 320 will move into the position associated with the selected mode. That is, if the first mode is selected, the first and second walls 310, 320 will move relative to one another so that they are spaced apart by the distance D1. If the second mode is selected, the first and second walls 310, 320 will move relative to one another so that they are spaced by the second distance D2. Next (or simultaneously with the movement of the first and second walls 310, 320) the door 104 of the beverage brewing apparatus 200 may open to expose a slot within which the beverage ingredient container 100 may be placed. With the door 104 open, the beverage ingredient container 100 may be slid into the slot so that the nozzle 140 engages the support member 214. Next, the door 104 may be closed. The beverage ingredient container 100 is then supported within the slot by the support member 214, with the body portion 160 of the beverage ingredient container 100 hanging freely from the support member 214.

In one embodiment, the operation may take place as follows. First, a user will select one of a plurality of brewing modes for a beverage vend using the user interface 210. Upon selection of the mode, the door 104 will open and the user will insert the beverage ingredient container 100 into the machine. Next, the dispense nozzle of the machine may be lowered into the nozzle of the beverage ingredient container 100. At this point, the first and second walls 310, 320 may move into the position associated with the desired mode. The first and second walls 310, 320 may already be in said position, or one or both of the first and second walls 310, 320 may need to be moved to achieve the position. Next, the beverage is vended by introducing the liquid into the beverage ingredient container. After this, the first and/or second walls 310, 320 may be moved away from the beverage ingredient container 100, the dispense nozzle may be removed from the nozzle, and the beverage ingredient container 100 may be ejected from the machine.

In one embodiment, there may be a metallic shell that engages between the door 104 and the machine side to take some of the extra load off of the pack constraint. In particular, depending on the injection pressure of the liquid, the beverage ingredient container 100 may apply an outward pressure of 20psi or so (an outward pressure of 100 or more pounds). Thus, the first and/or second walls 310, 320, which may be formed from plastic, may be surrounded or partially or fully covered by a metallic shell to help withstand the pressure.

Once the door 104 is closed, the beverage vend may begin. Specifically, the water in the water tank 245 may be pumped along the conduit 248 and the brewing conduit 249. The water will then pass through the nozzle 140 and into the cavity 115 of the beverage ingredient container 100. The beverage ingredient container 100 will expand as permitted depending on the positions of the first and second walls 310, 320 of the expansion limiter 300. The water will mix with the beverage ingredient in the cavity of the beverage ingredient container 100 to form a beverage which exits through an outlet in a bottom end of the beverage ingredient container. As noted herein, when the first mode is selected from the plurality of modes, expansion of the body portion 160 of the beverage ingredient container 100 may be unimpeded during the beverage vend. When the second mode is selected from the plurality of modes, the body portion 160 of the beverage ingredient container 100 may be impeded during the beverage vend.

In accordance with another method of operation, a user may decide to his or her own milk during the brewing process, as mentioned above. In a mode that allows the user to froth his or her own milk, the beverage brewing apparatus 200 operates in accordance with the second mode. As such, the first and second walls 310, 320 will move into the position shown in FIG. 9, where they are spaced apart by the second distance D2. In such an embodiment, upon the user selecting the mode and parameters, the user will place a cup containing a desired amount (for example, 3 ounces) of a milk product onto the cup holder station 208. Next, the control system 250 will open the valve 255 and activate the pump 246 so that the water passes from the water tank 245, through the conduit 248 and the jetting conduit 252, and out through the jetting nozzle 253 into the milk in the cup 209. The jetted water will cause the milk pre-placed in the cup to froth. Next, the user will insert the beverage ingredient container 100 into the beverage brewing apparatus. The control system 250 will then open the valve 254 and activate the pump 248 to pump the water from the water tank 245 through the conduit 248 and the brewing conduit 249 to the brewing outlet 251 whereby the water passes into the beverage ingredient container 100.

During this process, the beverage ingredient container 100 will expand, but the expansion will be limited by the placement of the first and second walls 310, 320. As such, the bed of the beverage ingredient will maintain a deeper depth, resulting in a higher extraction concentration of the solids of the beverage ingredient within the water. Thus, the walls 310, 320 of the expansion limiter 300 impede the expansion of the body portion 160 of the beverage ingredient container 100 during the beverage vend to increase an extraction concentration of the beverage ingredient in the beverage. This helps to ensure that the final beverage product meets a desired taste profile and is not too diluted due to the use of the user's own milk product which has been frothed by jetted water.

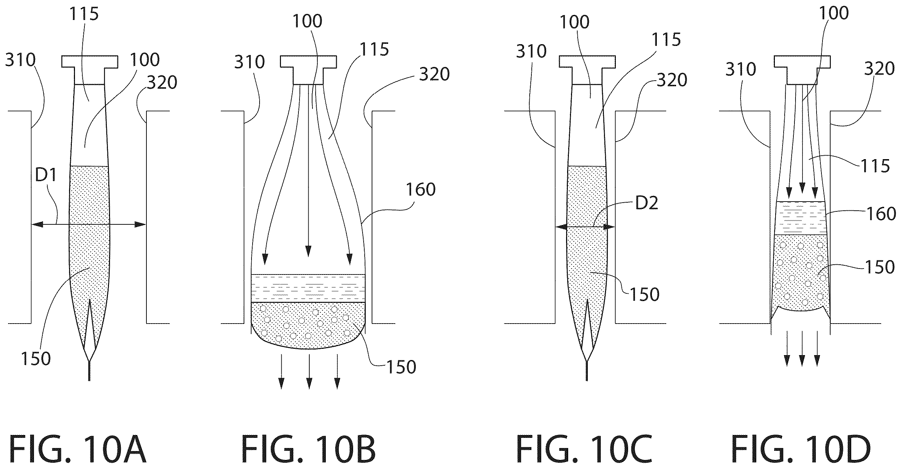

FIGS. 10A and 10B are schematic illustrations of the beverage ingredient container 100 both before and during a beverage vend in accordance with the first mode described herein. In FIGS. 10A and 10B, the first and second walls 310, 320 of the expansion limiter are spaced the first distance D1 from one another. The first distance D1 is sufficiently large such that the first and second walls 310, 320 do not contact or otherwise impede the expansion of the body portion 160 of the beverage ingredient container 100 during the beverage vend. As such, the depth of the beverage ingredient 150 inside of the cavity 115 decreases significantly during the beverage vend.

FIGS. 10C and 10D are schematic illustrations of the beverage ingredient container 100 both before and during a beverage vend in accordance with the second mode described herein. In FIGS. 10C and 10D, the first and second walls 310, 320 of the expansion limiter are spaced the second distance D2 from one another. The second distance D2 is less than the first distance D1. The second distance D2 is sufficiently small such that the first and second walls 310, 320 contact the body portion 160 of the beverage ingredient container 100 as the body portion 160 of the beverage ingredient container 100 expands during the beverage vend. That is, prior to the start of the beverage vend the first and second walls 310, 320 are spaced apart from the beverage ingredient container (no pre-load, as shown in FIG. 10C). During the beverage vend, the beverage ingredient container 100 begins to expand and soon comes into contact with the first and second walls 310, 320 which prevent further expansion of the beverage ingredient container 100. Thus, the depth of the beverage ingredient 150 in FIG. 10D is greater than the depth of the beverage ingredient 150 in FIG. 10B due to the difference in the amount of expansion of the body portion 160 of the beverage ingredient container 100 (and the corresponding difference in the volume of the cavity 115).

Among other variables, the extraction of solids from ground coffee is related to the flow rate and pressure of the water being used to extract it. The invention described herein aims to increase the pressure within the cavity 115 of the beverage ingredient container 100 (when operating in the second mode as compared to the first mode) by restricting its opening (i.e., restricting the expansion of the body portion 160 of the beverage ingredient container 100 and of the volume of the cavity 115). In the exemplified embodiment, this is achieved by positioning the first and second walls 310, 320 to either side of the beverage ingredient container 100 before brewing starts. If the first and second walls 310, 320 are sufficiently close to the starting position of the beverage ingredient container 100 (such as the position shown in FIG. 10C) then, as the beverage ingredient container 100 fills with water and the internal pressure increases, the beverage ingredient container 100 will expand to fill the void (any space between the first and second walls 310, 320 and the beverage ingredient container 100) but be unable to reach the normal fully expanded shape. However, as the first and second walls 310, 320 may not be in contact with the beverage ingredient container 100 at the start of the vend, no preload is required. This may significantly simplify the mechanical construction as compared to prior machines of this type.

Approximating the beverage ingredient (i.e., coffee) bed as a general fluidic restriction, the pressure required to pass a constant fluid flow rate through it is linearly related to the depth of the bed, and through an inverse square to the surface area of the bed. If the beverage ingredient container 100 is unable to expand (due to the positioning of the first and second walls 310, 320, for example), the filter base is unable to create the wide, and hence shallow, coffee bed. Instead, the same volume of coffee is distributed over a smaller area creating a deeper bed as shown in Fig. 10D. Both the reduced area and the deepening of the bed act to increase the brew pressure and hence the level of extraction. In experiments previously conducted, this has led to increases in brew pressure of ≈125% and increased coffee concentration of ≈70%.

As used throughout, ranges are used as shorthand for describing each and every value that is within the range. Any value within the range can be selected as the terminus of the range. In addition, all references cited herein are hereby incorporated by referenced in their entireties. In the event of a conflict in a definition in the present disclosure and that of a cited reference, the present disclosure controls.

While the invention has been described with respect to specific examples including presently preferred modes of carrying out the invention, those skilled in the art will appreciate that there are numerous variations and permutations of the above described systems and techniques. It is to be understood that other embodiments may be utilized and structural and functional modifications may be made without departing from the scope of the present invention. Thus, the spirit and scope of the invention should be construed broadly as set forth in the appended claims.

## Claims

1. A beverage brewing system comprising:
a beverage ingredient container comprising a body portion defining a cavity containing a beverage ingredient, the body portion of the beverage ingredient container being flexible so that, when the body portion of the beverage ingredient container is unimpeded during a beverage vend, the body portion expands from an initial state in which the cavity has a first volume to a maximum expanded state in which the cavity has a second volume that is greater than the first volume;
a beverage brewing apparatus comprising:
a support member configured to support the beverage ingredient container during the beverage vend without impeding the expansion of the body portion of the beverage ingredient container; and
an expansion limiter; and
wherein during the beverage vend the body portion of the beverage ingredient container expands from the initial state to an intermediate expanded state in which the cavity has a third volume that is less than the second volume, and wherein the expansion limiter prevents expansion of the body portion of the beverage ingredient container beyond the intermediate expanded state.

2. The beverage brewing system according to claim 1 wherein the expansion limiter is configured to at least partially surround the body portion of the beverage ingredient container during the beverage vend.

3. The beverage brewing system according to claim 1 or claim 2 wherein the expansion limiter comprises a first wall and a second wall that are spaced apart from one another, at least a portion of the body potion of the beverage ingredient container being located between the first and second walls during the beverage vend.

4. The beverage brewing system according to claim 3 wherein the first and second walls of the expansion limiter are not in compressive contact with the body portion of the beverage ingredient container at a start of the beverage vend.

5. The beverage brewing system according to claim 4 wherein during the vend, the body portion of the beverage ingredient container expands to the intermediate expanded state at which point the first and second walls of the expansion limiter are in contact with the body portion of the beverage ingredient container to prevent further expansion of the body portion of the beverage ingredient container.

6. The beverage brewing system according to claim 5 wherein the body portion of the beverage ingredient container comprises a front wall, a rear wall, and a periphery, the front and rear walls being bonded together along the periphery, wherein expansion of the body portion occurs in a direction between the front and rear walls, and wherein the first and second walls of the expansion limiter face the front and rear walls of the body portion of the beverage ingredient container, respectively.

7. The beverage brewing system according to any one of claims 1 to 6 wherein the beverage brewing apparatus is configured to perform the beverage vend in a first mode or a second mode based upon user selection, wherein upon a user selecting the first mode the expansion limiter is positioned relative to the beverage ingredient container so as to not impede the expansion of the body portion of the beverage ingredient container which enables the beverage ingredient container to expand to the maximum expanded state during the beverage vend, and wherein upon the user selecting a second mode the expansion limiter is positioned so as to impede the expansion of the body portion of the beverage ingredient container such that the beverage ingredient container expands from the initial state to the intermediate expanded state and is prevented from expanding further due to contact between the expansion limiter and the body portion of the beverage ingredient container.

8. A method of brewing a beverage comprising:
jetting water into a cup containing a milk product via an injection nozzle of a beverage brewing apparatus to form a milk froth;
inserting a beverage ingredient container into the beverage brewing apparatus, the beverage ingredient container comprising a body portion having a cavity containing a beverage ingredient;
performing a beverage vend comprising introducing a liquid via a brewing nozzle of the beverage brewing apparatus into the cavity of the beverage ingredient container, the liquid mixing with the beverage ingredient in the cavity of the beverage ingredient container to form a beverage which exits through an outlet of the beverage ingredient container and mixes with the milk froth in the cup to form a final beverage product; and
wherein expansion of the body portion of the beverage ingredient container is impeded during the beverage vend to increase an extraction concentration of the beverage ingredient in the beverage.

9. The method according to claim 8 wherein the expansion of the body portion of the beverage ingredient container is impeded by an expansion limiter comprising a first wall and a second wall positioned on opposing sides of the beverage ingredient container to prevent the beverage ingredient container from expanding to a maximum expanded state during the beverage vend.

10. The method according to claim 9 wherein the beverage ingredient container is not compressed by the expansion limiter prior to a start of the beverage vend.

11. The method according to claim 9 or claim 10 wherein the first and second walls of the expansion limiter are not in contact with the beverage ingredient container at a start of the beverage vend, and wherein during the beverage vend the beverage ingredient container expands into contact with the first and second walls of the expansion limiter, the first and second walls of the expansion limiter preventing the beverage ingredient container from reaching the maximum expanded state.

12. The method according to any one of claims 8 to 11 wherein during the beverage vend the body portion of the beverage ingredient container expands from an initial state whereby the cavity of the beverage ingredient container has a first volume to an intermediate expanded state whereby the cavity of the beverage ingredient has a second volume that is greater than the first volume, the second volume being less than a third volume associated with the beverage ingredient container in a maximum expanded state.

13. A beverage brewing system comprising:
a beverage ingredient container comprising a body portion defining a cavity containing a beverage ingredient, the body portion of the beverage ingredient container being flexible so that, when the body portion of the beverage ingredient container is unimpeded during a beverage vend, the body portion expands from an initial state to a maximum expanded state;
a beverage brewing apparatus comprising:
a support member configured to support the beverage ingredient container during the beverage vend; and
an expansion limiter comprising a first wall and a second wall that are positioned adjacent to opposing surfaces of the beverage ingredient container during the beverage vend; and
wherein prior to a start of the beverage vend, at least one of the first and second walls is spaced apart from the beverage ingredient container, and wherein during the beverage vend the beverage ingredient container expands into contact with each of the first and second walls, the first and
second walls preventing the beverage ingredient container from expanding to the maximum expanded state.

14. A beverage apparatus comprising:
a support member configured to support a beverage ingredient container during a beverage vend;
an expansion limiter comprising a first wall and a second wall that are configured to be positioned adjacent to opposing major surfaces of the beverage ingredient container during the beverage vend; and
wherein the beverage brewing apparatus is operable to vend a beverage in:
a first mode whereby the first and second walls are spaced apart by a first maximum distance; and
a second mode whereby the first and second walls are spaced apart by a second maximum distance, the second maximum distance being less than the first maximum distance.

15. A beverage brewing system comprising:
a beverage ingredient container comprising a body portion defining a cavity containing a beverage ingredient;
a beverage brewing apparatus comprising:
a support member configured to support the beverage ingredient container during a beverage vend; and
an expansion limiter;
wherein prior to initiating the beverage vend, the beverage ingredient container is configured to be supported by the support member so that at least a portion of an outer surface of the body portion of the beverage ingredient container is spaced apart from the expansion limiter; and
wherein during the beverage vend a volume of the cavity of the body portion of the beverage ingredient container is configured to expand until the portion of the outer surface of the body portion of the beverage ingredient container contacts the expansion limiter to prevent further expansion of the volume of the cavity.
